# EUROPÄISCHE PATENTSCHRIFT

(11) **EP 2 111 966 B1**
(45) Veröffentlichungstag und Bekanntmachung des Hinweises auf die Patenterteilung: **10.09.2014**
(21) Anmeldenummer: 09166357.5
(22) Anmeldetag: 24.11.2008
(51) Int. Cl.: B29C 47/08, B29C 47/68

(54) **Fließfähigen Kunststoff verarbeitende Anlage**
Flowable plastic processing system
Système de traitement de plastique coulable

(30) Priorität: 23.11.2007 DE 102007056594
(43) Veröffentlichungstag der Anmeldung: 28.10.2009
(62) Teilanmeldung aus: 08020376.3
(73) Patentinhaber: Kreyenborg Verwaltungen und Beteiligungen GmbH & Co. KG, D-48157 Münster (DE)
(72) Erfinder: Hartmann, Frank, 48565, Steinfurt (DE)
(74) Vertreter: Habbel, Ludwig

(56) Entgegenhaltungen:
- GB-A- 1 489 148
- GB-A- 1 551 749
- US-A- 3 684 419
- US-A- 3 840 312
- US-A- 4 359 387
- US-B2- 7 124 581

## Beschreibung

Die Erfindung betrifft eine Anlage nach dem Oberbegriff des Anspruchs 1.

Aus der GB 1 551 749 A, die als nächstkommender Stand der Technik angesehen wird, ist eine derartige Anlage bekannt. Sie dient dazu, bei einer Gießform regelmäßig zwei Formhälften über eine vergleichsweise längere Wegstrecke schnell zu schließen, wozu ein vergleichsweise geringer hydraulischer Druck erforderlich ist, und anschließend die beiden Formhälften mit hoher Schließkraft sicher aneinander zu halten. Hierzu ist eine Volumenpumpe vorgesehen, welche mit vergleichsweise geringem Druck eine vergleichsweise große Menge an Hydraulikflüssigkeit fördert, um die Schließ- oder Öffnungsbewegung eines beweglichen Teils der Gießform über die erwähnte längere Wegstrecke schnell zu ermöglichen. Zur Erzielung der hohen Schließkraft ist eine Hockdruckpumpe vorgesehen, die durch einen eigenen Hydraulikmotor angetrieben ist. Die beiden Pumpen sind in Reihe geschaltet, indem die Volumenpumpe das Hydraulikfluid zum Hydraulikmotor der Hockdruckpumpe fördert.

Auch die US 3 840 312 A betrifft eine Anordnung, die bei Spritzgießmaschinen verwendbar ist. Zwei von einem gemeinsamen Motor angetriebene Pumpen wirken auf einen einer Schnecke zugeordneten Hydraulikzylinder ein. Eine Pumpe dient als Haltepumpe, während die zweite als Unterstützungspumpe dient, die einen besonders hohen Volumenstrom oder einen besonders hohen Druck ermöglicht. In Abhängigkeit von dem Druck, der im Inneren der Gießform gemessen wird, werden die beiden Pumpen angesteuert. Stets fördert eine der beiden Pumpen im Kurzschluss bzw. Leerlauf die Hydraulikflüssigkeit in einen Tank, und mittels eines Umschaltventils kann bestimmt werden, für welche der beiden Pumpen dies zutrifft. Um eine optimale Füllung der Gießform sicherzustellen und den Volumenschwund auszugleichen, der sich regelmäßig beim Abkühlen des Kunststoffs einstellt, wird mittels der Schnecke Kunststoff nachgefördert, wenn der Volumenschwund zu einem Druckabfall in der Form führt. Mittels eines Sperrventils kann der Hydraulikstrom zu dem Hydraulikzylinder gänzlich unterbunden werden, falls in der Gießform ein bestimmter Druck erreicht ist.

Die US 3 684 419 A betrifft einen Siebwechsler, bei dem mittels hydraulischem Druck eine rings um das Sieb verlaufende Dichtung an eine Dichtfläche gepresst wird. Um für einen regelmäßig durchzuführenden Siebwechsel den Siebträger problemlos bewegen zu können, kann der hydraulische Druck abgebaut werden.

Aus der Praxis sind Anlagen bekannt, die eine so genannte Speicherhydraulik verwenden, weisen also einen unter Druck setzbaren Speicher für Hydraulikflüssigkeit auf. Dies ermöglicht die Verwendung von Hochdruckpumpen, die bei vergleichsweise geringer Förderleistung pro Zeiteinheit einen vergleichsweise hohen Druck aufzubauen vermögen. Im Hydraulikspeicher wird daher über einen vergleichsweise längeren Zeitraum ein hoher Druck aufgebaut, so dass eine große hydraulische Flüssigkeitsmenge mit dem entsprechend hohen Druck bereitsteht.

Bei Anlagen, die geschmolzenen Kunststoff verarbeiten, besteht - ähnlich wie dies für das Verfahren von Siebträgern an Siebwechslern bekannt ist - auch für die Betätigung von Bypass-, Anfahr- und Umschaltventilen die Anforderung, das zu bewegende Bauteil möglichst schnell verfahren zu können. Anders als bei den frei beweglichen Formhälften einer Gießform werden diese Bauteile stets innerhalb eines umgebenden Gehäuses bewegt. Dabei kann gegebenenfalls ein hoher Widerstand zu überwinden sein, der regulär nicht vorgesehen ist, aber z. B. durch das Anhaften festgebackener Kunststoffreste bedingt sein kann, so dass in einem unregelmäßigen, nicht vorhersehbaren Ausmaß ein erhöhter Widerstand zu überwinden ist.

Verallgemeinernd werden nachfolgend die zu bewegenden Bauteile wie Siebträger, Bypass-, Anfahr- und Umschaltventile auch jeweils als "bewegliches Element" bezeichnet. Als Beispiel für eine gattungsgemäße Anlage wird nachfolgend stets ein Siebwechsler erwähnt, bei welchem als bewegliches Bauteil beispielhaft ein Siebträger erwähnt wird.

Wenn ein Siebwechsel durchgeführt werden soll, kann auf diese Weise der Siebträger mittels der großen Flüssigkeitsmenge um einen großen Verfahrweg innerhalb kurzer Zeit bewegt werden. Wenn der Siebträger zwei Siebe aufweist, kann auf diese Weise ein verschmutztes Sieb aus dem Materialführungskanal bewegt werden und gleichzeitig ein sauberes, eine hohe Durchlässigkeit ermöglichendes Sieb in den Materialkanal eingefahren werden. In dieser Position steht das verschmutzte Sieb in einer Wechselstellung, in der es zugänglich ist und gesäubert werden kann bzw. gegen ein unbenutztes bzw. zuvor gereinigtes Sieb ausgewechselt werden kann.

Allerdings kann die Beweglichkeit des Siebträgers z. B. durch das Anhaften festgebackener Kunststoffreste insofern behindert sein, als ein hoher Verfahrwiderstand zu überwinden ist. Zu diesem Zweck steht die im Hydraulikspeicher bevorratete Flüssigkeitsmenge unter dem erwähnten hohen Druck, der die Überwindung dieser Widerstände ermöglicht.

Bei den aus der Praxis bekannten Anlagen ist nachteilig, dass die Speicherhydraulik einen vergleichsweise teuren Hydraulikspeicher benötigt, der aufgrund des in ihm herrschenden Druckes einerseits in der Herstellung vergleichsweise teuer ist und der insbesondere eine regelmäßige mit erheblichen Folgekosten verbundene und in regelmäßigen zeitlichen Abständen durchzuführende technische Überprüfung erfordert.

Der Erfindung liegt die Aufgabe zugrunde, eine gattungsgemäße Anlage dahingehend zu verbessern, dass diese mit möglichst geringen Unterhaltskosten betrieben werden kann.

Diese Aufgabe wird durch eine Anlage mit den Merkmalen des Anspruchs 1 gelöst.

Die Erfindung schlägt mit anderen Worten vor, zwei Pumpen zu verwenden, die gleichzeitig betrieben werden können, wenn das bewegliche Element bewegt werden soll, wie z. B. der Siebträger im Falle eines Siebwechsels. Dabei ermöglicht eine erste Pumpe einen hohen hydraulischen Volumenstrom, der bei geringem Widerstand des Siebträgers eine schnelle Verfahrbarkeit des Siebträgers über eine vergleichsweise große Wegstrecke innerhalb kurzer Zeit ermöglicht. Diese erste Hydraulikpumpe ist daher als Volumenpumpe bezeichnet.

Liegt jedoch ein höherer Widerstand beim Verfahren des beweglichen Elementes vor, z. B. des erwähnten Siebträgers, so bewirkt die zweite Hydraulikpumpe, dass der Siebträger gegen diesen Widerstand problemlos verschoben werden kann. Hierzu ist die zweite Hydraulikpumpe als Hochdruckpumpe ausgelegt, die zwar einen geringen Volumenstrom zur Verfügung stellt als die Volumenpumpe, aber den Aufbau eines hohen Drucks ermöglicht.

Wenn beispielsweise zunächst ein hoher Anfahrwiderstand des Siebträgers zu überwinden ist, wird dieser Widerstand mit Hilfe der Hochdruckpumpe überwunden, so dass anschließend eine schnelle Verfahrbarkeit des Siebträgers durch beide Pumpen und insbesondere den hohen Volumenstrom der Volumenpumpe ermöglicht wird. Wenn umgekehrt am Ende des Verfahrweges der Widerstand des Siebträgers höher wird, so ist zunächst die schnelle Verfahrbarkeit des Siebträgers mittels der Volumenpumpe über den größten Teil der Wegstrecke sichergestellt, während es zum Schluss die Hochdruckpumpe ermöglicht, den Siebträger gegen den herrschenden Verfahrwiderstand in seine Endposition zu verfahren.

Vorschlagsgemäß werden die beiden Hydraulikpumpen nicht unabhängig voneinander betrieben, sondern gleichzeitig von demselben Motor angetrieben. Hierdurch ergibt sich eine konstruktive Vereinfachung, und aufgrund der geringeren Anzahl benötigter Bauteile kann die Fehlerwahrscheinlichkeit gesenkt werden. Zudem bewirkt der Entfall eines ansonsten gegebenenfalls erforderlichen zweiten Motors eine Kosteneinsparung. Gleichzeitig wird weniger Bauraum benötigt, so dass die Aufstellung einer vorschlagsgemäßen Anordnung in einer vorgegebenen Umgebung vereinfacht wird.

Vorschlagsgemäß ist ein Sperrventil vorgesehen, welches in der Versorgungsleitung zwischen der Volumenpumpe und dem Hydraulikzylinder angeordnet ist und schließlich ist eine Hochdruckleitung vorgesehen, welche von der Hochdruckpumpe ebenfalls zum Hydraulikzylinder führt. Dabei umgeht die Hochdruckleitung das Sperrventil, so dass bei gesperrtem Sperrventil der von der Hochdruckpumpe aufgebaute Druck nicht gegen die Volumenpumpe arbeitet, sondern ausschließlich auf den Hydraulikzylinder einwirkt. Nimmt der Druck innerhalb dieser Hochdruckleitung jedoch ab, beispielsweise weil der Siebträger vergleichsweise widerstandsarm verfahren werden kann, wird das Sperrventil geöffnet. Zusätzlich zu dem Volumenstrom der Hochdruckpumpe kann nun der im Vergleich zur Hochdruckpumpe größere Volumenstrom von der Volumenpumpe durch das geöffnete Sperrventil auf den Hydraulikzylinder einwirken und die schnelle Verfahrbarkeit des Siebträgers bei geringem Fahrwiderstand ermöglichen.

Vorschlagsgemäß kann daher nicht nur auf einen hydraulischen Druckspeicher, sondern auch auf einen zweiten Antriebsmotor für die zweite Pumpe verzichtet werden; es ist lediglich ein druckloser Vorratsspeicher für das Hydraulikfluid erforderlich, der keinen aufwendigen Sicherheitsbestimmungen und Sicherheitsuntersuchungen unterliegt und aus dem die beiden Hydraulikpumpen versorgt werden.

Vorschlagsgemäß steht die Versorgungsleitung stromabwärts von dem Sperrventil mit einem Entlastungsventil in Verbindung. Wenn die Volumenpumpe gemeinsam oder jedenfalls gleichzeitig mit der Hochdruckpumpe angetrieben ist, ist sie dementsprechend auch eingeschaltet und bestrebt, Hydraulikfluid zu fördern, wenn das Sperrventil geschlossen ist. Um eine dabei auftretende Überlastung und daraus resultierende Schäden an der Volumenpumpe zu vermeiden, kann vorgesehen sein, dass bei geschlossenem Sperrventil das Hydraulikfluid in einer Art Kurzschluss-Kreislauf von der Volumenpumpe zurück in den das Hydraulikfluid aufnehmenden Vorratsbehälter gefördert wird. Hierzu führt von dem Entlastungsventil eine Rückflussleitung zu dem Vorratsbehälter.

Das Entlastungsventil öffnet bei einem Druck, der höchstens dem von der Volumenpumpe aufzubringenden Maximaldruck entspricht und jedenfalls bei einem Druck, welcher in der Versorgungsleitung herrscht, wenn das Sperrventil geschlossen ist und die Volumenpumpe eingeschaltet ist. Sobald das Sperrventil öffnet und daher der Druck in der Versorgungsleitung abnimmt, schließt das Entlastungsventil und die Volumenpumpe kann auf den Hydraulikzylinder einwirken.

Das Entlastungsventil ermöglicht es, die Volumenpumpe ohne die Gefahr einer Überlastung bzw. Beschädigung ständig mitlaufen zu lassen, so dass sehr kurze Umsteuerzeiten ermöglicht werden zwischen dem Hydraulikstrom, der von der Hochdruckpumpe oder von der Volumenpumpe zum Hydraulikzylinder fließt, verglichen mit einer hydraulischen Schaltung, bei welcher zum Schutz der Volumenpumpe die Volumenpumpe jedes Mal abgeschaltet würde, wenn das Sperrventil schließt, und jedes Mal erneut anlaufen würde, wenn das Sperrventil öffnet.

Vorteilhaft kann der Siebträger als Flachschieber ausgestaltet sein. Insbesondere bei dieser Ausführungsform als Flachschieber sind, wenn zwei Siebe im Abstand voneinander angeordnet sind, die schnellen Verfahrwege erforderlich und bei Flachschiebern ist insbesondere der Verfahrwiderstand vergleichsweise hoch, zumindest auf bestimmten Abschnitten des Verfahrweges, so dass bei diesem Typ von Siebwechslern sowohl ein hoher Druck als auch eine hohe Volumenleistung für die hydraulische Bewegung des Siebträgers erforderlich sind.

Vorteilhaft kann die Hochdruckleitung von der Hochdruckpumpe zur Versorgungsleitung führen und stromabwärts von dem Sperrventil in die Versorgungsleitung münden. Auf diese Weise sind nicht separate Leitungsanschlüsse an den Hydraulikzylinder einerseits für die Volumenleitung und andererseits für die Hochdruckleitung erforderlich, so dass bei einer bestehenden Anlagenkonstruktion keine Änderungen am Hydraulikzylinder erforderlich sind und die vorschlagsgemäße Ausgestaltung mit geringem technischen und wirtschaftlichen Aufwand verwirklicht werden kann.

Vorteilhaft kann das Sperrventil als Rückschlagventil ausgestaltet sein, so dass es selbsttätig den jeweils erforderlichen Schaltzustand einnimmt und auf eine vergleichsweise aufwendige Steuerung zur Ansteuerung des Sperrventils verzichtet werden kann. Dabei ist das Rückschlagventil derart ausgestaltet, dass es seine Offenstellung einnimmt, wenn der Druck auf der Seite der Volumenpumpe größer ist als der Druck auf Seiten der Hochdruckpumpe. Dies ist beispielsweise dann der Fall, wenn der Hydraulikzylinder sich vergleichsweise widerstandsarm verschieben lässt, so dass die vergleichsweise geringe Menge des von der Hochdruckpumpe geförderten Hydraulikfluids keinen Druckanstieg stromabwärts vom Sperrventil bewirkt. Erhöht sich jedoch der Widerstand des Hydraulikzylinders, so steigt der Druck stromabwärts vom Sperrventil an, so dass auf der Seite des Hydraulikzylinders nun ein Überdruck gegenüber dem von der Volumenpumpe aufgebauten Druck herrscht. Bei diesen Druckverhältnissen nimmt das als Rückschlagventil ausgestaltete Sperrventil automatisch seine Schließstellung ein, so dass nun die Hochdruckpumpe den hohen, auf den Hydraulikzylinder einwirkenden Druck aufbauen kann, um den Fahrwiderstand des Siebträgers zu überwinden.

Ein Ausführungsbeispiel der Erfindung wird anhand der rein schematischen Darstellung näher erläutert.

Dabei ist mit 1 insgesamt eine hydraulische Pumpenanordnung in Form eines Hydraulikplans dargestellt, wobei die Aggregatsgrenze dieser hydraulischen Pumpenanordnung 1 mit einer strichpunktierten Linie 2 angedeutet ist und außerhalb dieser Aggregatsgrenze 2, von der Pumpenanordnung 1 beaufschlagt, ein Hydraulikzylinder 3 angedeutet ist, der zum Verschieben eines als Flachschieber ausgestalteten Siebträgers bei einem Siebwechsler dient.

Die Pumpenanordnung 1 weist einen Vorratsbehälter 4 für Hydraulikfluid auf, der nicht als Drucktank ausgestaltet ist. Innerhalb des Vorratsbehälters 4 sind zwei Hydraulikpumpen angeordnet, die das Hydraulikfluid aus dem Vorratsbehälter 4 herauspumpen können: Erstens ist eine Volumenpumpe 5 vorgesehen, die beispielsweise eine Förderleistung von 80 l / minaufweist und zweitens ist eine Hochdruckpumpe 6 vorgesehen, die beispielsweise eine Förderleistung von 10 l / min aufweist, aber einen im Vergleich zur Volumenpumpe 5 deutlich höheren hydraulischen Druck aufzubauen vermag.

Beide Hydraulikpumpen sind gemeinsam durch einen einzigen Motor 7 angetrieben, wobei durch die vorschlagsgemäße Ausgestaltung der Pumpenanordnung 1 ein vergleichsweise kleiner Motor mit vergleichsweise geringer Leistung verwendet werden kann und auf einen hydraulischen Druckspeicher verzichtet werden kann. Denn zur Betätigung des Hydraulikzylinders 3 arbeitet die Pumpenanordnung 1 wie folgt: Durch den Motor 7 werden die Volumenpumpe 5 und die Hochdruckpumpe 6 gleichzeitig angetrieben. Die Volumenpumpe 5 erzeugt einen vergleichsweise großen hydraulischen Volumenstrom, der durch eine Versorgungsleitung 8 zum Hydraulikzylinder 3 fließt. In die Versorgungsleitung 8 zum Hydraulikzylinder 3 fließt. In die Versorgungsleitung 8 ist ein Sperrventil 9 geschaltet, welches als Rückschlagventil ausgestaltet ist und durch den Volumenstrom von der Volumenpumpe 5 in seine Offenstellung gebracht wird.

Gleichzeitig mit der Volumenpumpe 8 wird auch die Hochdruckpumpe 6 betätigt, wobei deren Hochdruck-Volumenstrom über eine Hochdruckleitung 10 fließt und stromabwärts von dem Sperrventil 9, also in Fließrichtung dahinter, in die Versorgungsleitung 8 eingespeist wird. Wenn der Hydraulikzylinder 3 einen hohen Widerstand bietet, erhöht sich der Druck zwischen dem Hydraulikzylinder 3 und dem Sperrventil 9, so dass dieses in seine Schließstellung gebracht wird und nun der von der Hochdruckpumpe 6 aufgebaute Druck auf den Hydraulikzylinder 3 einwirken kann.

Der aus dem Hydraulikzylinder 3 verdrängte Anteil an Hydraulikflüssigkeit gelangt durch eine Rückflussleitung 11 in den Vorratsbehälter 4.

Ein Umschaltventil 12 ist vorgesehen, um den von den Hydraulikpumpen erzeugten Volumenstrom wahlweise einer von zwei Hin- und Rückleitungen 14 des Hydraulikzylinders 3 zuzuführen, so dass durch entsprechende Umschaltung wahlweise eine der beiden Leitungen 14 als Hinleitung und die andere als Rückleitung dienen kann, wobei durch Auswahl der jeweiligen Hinleitung 14 und der korrespondierenden Rückleitung 14 die Bewegungsrichtung des Hydraulikzylinders 3 bestimmt werden kann.

Die Versorgungsleitung 8 steht stromabwärts von dem Sperrventil 9 mit einem Entlastungsventil 15 in Verbindung, so dass die Volumenpumpe 8 bei geschlossenem Sperrventil 9 das Hydraulikfluid in einem Kreislauf zurück in den Vorratsbehälter 4 fördert, ohne dass das Hydraulikfluid zum Hydraulikzylinder 3 gelangt, so dass dieser Kreislauf als Kurzschluss-Kreislauf bezeichnet wird. Das Entlastungsventil 15 steht ausgangsseitig mit der Rückflussleitung 11 in Verbindung.

Rein beispielhaft wird davon ausgegangen, dass bei dem dargestellten Ausführungsbeispiel der Maximaldruck, den die Volumenpumpe 8 aufbringen kann, 140 bar beträgt, bei einem Volumenstrom von 80 l/min, und das die Hochdruckpumpe einen Maximaldruck von 280 bar bei einem Volumenstrom von 10 l/min aufbringen kann.

Das Entlastungsventil 15 öffnet bei einem einstellbaren, so genannten Schaltdruck, der auf 140 bar oder weniger eingestellt ist, wobei dieser Schaltdruck in der in der Versorgungsleitung 8 herrscht, wenn das Sperrventil 9 geschlossen ist und die Volumenpumpe 8 eingeschaltet ist. Sobald das Sperrventil 9 öffnet und daher der Druck in der Versorgungsleitung 8 abnimmt und unter den Wert Schaltdruckes absinkt, schließt das Entlastungsventil 15 wieder. Der Kurzschluss wird beendet und die Volumenpumpe 8 wirkt wieder auf den Hydraulikzylinder 3 ein.

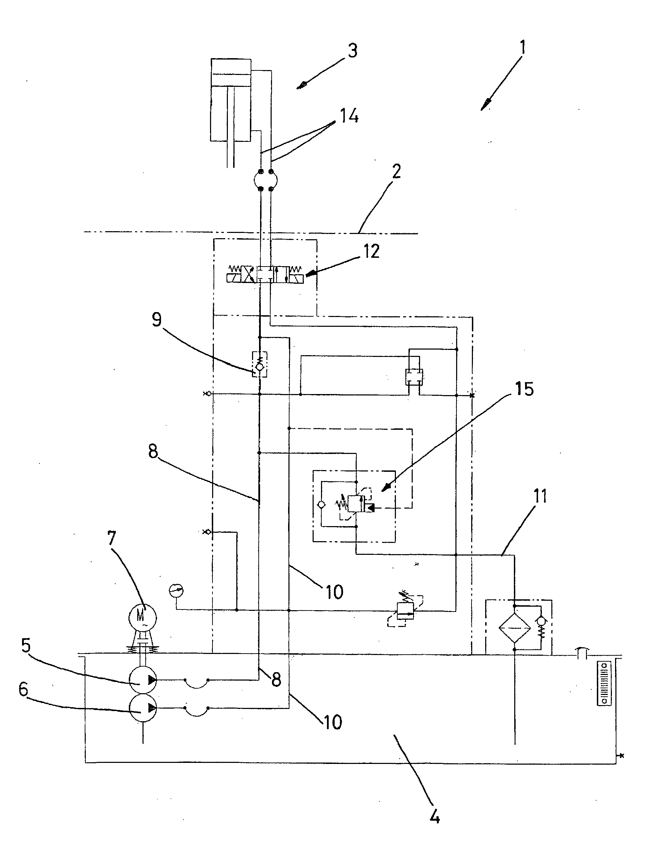

Die Pumpenanordnung 1 ist ansonsten in vielen Bereichen ähnlich wie aus der Praxis vorbekannte Pumpenanordnungen ausgestaltet, so dass nicht sämtliche Elemente der in der Zeichnung dargestellten Pumpenanordnung 1 näher erläutert werden müssen.

## Patentansprüche

1. Fließfähigen Kunststoff verarbeitende Anlage,
• mit einem zwischen zwei Positionen beweglichen Element,
wobei das bewegliche Element mittels eines Hydraulikzylinders beweglich ist,
• und mit einem Motor, der eine Hydraulikpumpe antreibt, wobei von der Hydraulikpumpe eine hydraulische Versorgungsleitung zu dem Hydraulikzylinder führt,
• und einer ersten, als Volumenpumpe (5) bezeichneten Hydraulikpumpe,
• einer zweiten, als Hochdruckpumpe (6) bezeichneten Hydraulikpumpe,
wobei die Hochdruckpumpe (6) eine im Vergleich zur Volumenpumpe (5) geringere Volumenleistung aufweist, jedoch einen vergleichsweise höheren Pumpendruck aufbaut,
• einem Sperrventil (9) in der Versorgungsleitung (8), welches die hydraulische Verbindung zwischen der Volumenpumpe (5) und dem Hydraulikzylinder (3) wahlweise freigibt oder unterbricht,
• sowie eine Hochdruckleitung (10), welche das Hydraulikfluid von der Hochdruckpumpe (6) an dem Sperrventil (9) vorbei zu dem Hydraulikzylinder (3) führt,
**dadurch gekennzeichnet,**
**dass** die Volumenpumpe (5) und die Hochdruckpumpe (6) gleichzeitig von demselben Motor (7) angetrieben sind und die Versorgungsleitung (8) stromabwärts von dem Sperrventil (9) mit einem Entlastungsventil (15) in Verbindung steht,
von dem Entlastungsventil (15) eine Rückflussleitung (11) zu einem Vorratsbehälter (4) mit Hydraulikfluid führt, und das Entlastungsventil (15) bei einem Druck öffnet, der in der Versorgungsleitung (8) bei geschlossenem Sperrventil (9) und eingeschalteter Volumenpumpe (5) herrscht und der höchstens dem von der Volumenpumpe (5) aufzubringenden Maximaldruck entspricht.

2. Anlage nach Anspruch 1, **dadurch gekennzeichnet, dass** die Hochdruckleitung (10) von der Hochdruckpumpe (6) zu der Versorgungsleitung (8) führt und stromabwärts von dem Sperrventil (9) in die Versorgungsleitung (8) mündet.

3. Anlage nach einem der vorhergehenden Ansprüche, **dadurch gekennzeichnet, dass** das Sperrventil (9) als Rückschlagventil ausgestaltet ist,
welches bei einem auf der Seite der Volumenpumpe (5) herrschenden Überdruck seine Offenstellung einnimmt, und bei einem auf der Seite des Hydraulikzylinders (3) herrschenden Überdruck seine Schließstellung einnimmt.

4. Anlage nach einem der vorhergehenden Ansprüche, **dadurch gekennzeichnet, dass** die Anlage ein Siebwechsler ist.

5. Anlage nach Anspruch 4, **dadurch gekennzeichnet, dass** das bewegliche Element ein Siebträger ist.

6. Anlage nach Anspruch 5, **dadurch gekennzeichnet, dass** der Siebträger als Flachschieber ausgestaltet ist.

7. Anlage nach einem der Ansprüche 1 bis 4, **dadurch gekennzeichnet,**
**dass** das bewegliche Element ein Bypass-, Anfahr- oder Umschaltventil ist.

8. Pumpenanordnung (1) einer fließfähigen Kunststoff verarbeitende Anlage, wobei die Pumpenanordnung (1) unter Verzicht auf einen hydraulischen Druckspeicher nach einem der vorhergehenden Ansprüche ausgestaltet ist.

## Claims

1. Flowable-plastic processing system with an element which can be moved between two positions, where this movable element is moved by means of a hydraulic cylinder, and with a motor which drives a hydraulic pump, where a hydraulic supply pipe leads from the hydraulic pump to the hydraulic cylinder and to a first hydraulic pump described as a volume pump (5),
with a second hydraulic pump described as a high-pressure pump (6), where the high-pressure pump (6) has a lower volume capacity compared to the volume pump (5), but which achieves a comparatively high pumping pressure,
with a stop valve (9) in the supply pipe (8) which can open or close the hydraulic connection between the volume pump (5) and the hydraulic cylinder (3) as required, and a high-pressure pipe (10) which feeds the hydraulic fluid from the high-pressure pump (6) past the stop valve (9) to the hydraulic cylinder (3),
**characterised in that** the volume pump (5) and the high-pressure pump (6) are driven simultaneously by the same motor (7), and the supply pipe (8) is connected to a pressure-relief valve (15) downstream from the stop valve (9), a return-flow pipe (11) leads from the pressure-relief valve (15) to a reservoir tank (4) for hydraulic fluid, and the pressure-relief valve (15) opens at a pressure which prevails in the supply pipe (8) when the stop valve (9) is closed and the volume pump (5) is switched on, and which equals at most the maximum pressure provided by the volume pump (5).

2. System in accordance with claim 1, **characterised in that** the high-pressure pipe (10) leads from the high-pressure pump (6) to the supply pipe (8) and opens into the supply pipe (8) downstream from the stop valve (9).

3. System in accordance with any of the aforementioned claims, **characterised in that** the stop valve (9) is formed as a back-pressure valve, which opens in case of excess pressure on the side of the volume pump (5) and closes in case of excess pressure on the side of the hydraulic cylinder (3).

4. System in accordance with any of the aforementioned claims, **characterised in that** the system is a screen changer.

5. System in accordance with claim 4, **characterised in that** the movable element is a screen carrier.

6. System in accordance with claim 5, **characterised in that** the screen carrier is formed as a flat slide.

7. System in accordance with any of the claims 1 - 4, **characterised in that** the movable element is a bypass, starting or reversing valve.

8. Pump arrangement (1) for a flowable-plastic processing system, where the pump arrangement (1) is formed in accordance with any of the aforementioned claims but without a hydraulic accumulator.

## Revendications

1. Système de traitement de plastique coulable comprenant un élément déplaçable entre deux positions, sachant que l'élément mobile peut se déplacer au moyen d'un vérin hydraulique, et comprenant un moteur qui entraîne une pompe hydraulique, sachant que de la pompe hydraulique une conduite d'alimentation hydraulique aboutit au vérin hydraulique, et vers une première pompe hydraulique appelée pompe volumétrique (5)
vers une deuxième pompe hydraulique appelée pompe haute pression (6), sachant que la pompe haute pression (6) présente un débit volumique inférieur à celui de la pompe volumétrique (5), mais qu'elle génère une pression comparativement plus élevée,
une vanne de barrage (9) dans la conduite d'alimentation (8) qui au choix permet ou interrompt la jonction hydraulique entre la pompe volumétrique (5) et le vérin hydraulique (3), ainsi qu'une conduite haute pression (10) qui conduit le fluide hydraulique de la pompe haute pression (6) vers le vérin hydraulique (3) en contournant la vanne de barrage (9),
**caractérisé en ce que** la pompe volumétrique (5) et la pompe haute pression (6) sont entraînées simultanément par le même moteur (7), et que la conduite d'alimentation (8) est connectée en aval de la vanne de barrage (9) avec une vanne de délestage (15), **en ce que** de la vanne de délestage (15) part une conduite de reflux (11) vers un réservoir (4) servant à accumuler le fluide hydraulique, et **en ce que** la vanne de délestage (15) s'ouvre en présence d'une pression régnant dans la conduite d'alimentation (8) lorsque la vanne de barrage (9) est fermée et que la pompe volumétrique (5) est allumée, et que cette pression correspond au maximum à la pression maximale que doit développer la pompe volumétrique (5).

2. Installation selon la revendication 1, **caractérisée en ce que** la conduite haute pression (10) va de la pompe haute pression (6) vers la conduite d'alimentation (8) et qu'elle débouche en aval de la vanne de barrage (9) dans la conduite d'alimentation (8).

3. Système selon l'une des revendications précédentes, **caractérisé en ce que** la vanne de barrage (9) est configurée en vanne à clapet antiretour qui, lorsque règne une surpression sur le côté de la pompe volumétrique (5), se rend en position ouverte et qui, lorsque règne une surpression sur le côté du vérin hydraulique (3), se rend en position fermée.

4. Système selon l'une des revendications précédentes, **caractérisé en ce que** le système sert à changer un filtre.

5. Système selon la revendication 4, **caractérisé en ce que** l'élément mobile est un support de filtre.

6. Système selon la revendication 5, **caractérisé en ce que** le support de filtre est configuré en tiroir plat.

7. Système selon l'une des revendications 1 à 4, **caractérisé en ce que** l'élément mobile est une vanne de bypass, de démarrage ou de commutation.

8. Agencement de pompes (1) dans un système de traitement de plastique coulable, sachant que l'agencement de pompe (1) est configuré en renonçant à un accumulateur de pression hydraulique selon l'une des revendications précédentes.
